# EUROPEAN PATENT SPECIFICATION

(11) **EP 2 320 697 B1**
(45) Date of publication and mention of the grant of the patent: **12.12.2012**
(21) Application number: 08876773.6
(22) Date of filing: 07.10.2008
(51) Int. Cl.: H04W 36/12

(54) **METHOD FOR SWITCHING MSC-POOL INTER OFFICES**
VERFAHREN ZUM WECHSELN DES MSC-POOLS ZWISCHEN ÄMTERN
PROCÉDÉ DE COMMUTATION DE GROUPE DE MSC ENTRE CENTRAUX

(30) Priority: 19.08.2008 CN 200810141939
(43) Date of publication of application: 11.05.2011
(73) Proprietor: ZTE Corporation, Shenzhen, Guangdong 518057 (CN)
(72) Inventor: SU, Jian, Guangdong 518057 (CN); LIU, Shaoyong, Guangdong 518057 (CN); MA, Qianli, Guangdong 518057 (CN)
(74) Representative: Gervasi, Gemma
(86) International application number: PCT/CN2008/072611
(87) International publication number: WO 2010/020096

(56) References cited:
- EP-A1- 1 473 950
- WO-A1-02/35879
- WO-A1-2004/047467
- CN-A- 1 435 062
- CN-A- 101 217 694

## Description

### Technical Field

The present invention relates to interoffice switch technique in the field of mobile communication, and in particular, to a method for Mobile Switch Controller Pool (MSC-Pool) interoffice switch in the field of mobile communication.

### Background Art

MSC-Pool is an important mode for networking, and this technique breaks the limitation in the conventional network that one Basic Station Controller (BSC) or Radio Network Controller (RNC) can only be connected to one service Mobile Switch Controller (MSC), Mobile Switch Control emulator (MSCe) or MSC-Server. In MSC-Pool networking, one BSC or RNC can be connected to a plurality of service MSCs, MSCes and MSC-Servers, which together constitute a resource pool for providing services for the connected BSC or RNC.

At present, the main functions of a resource pool include: load sharing, disaster tolerance, reducing interoffice location update, and reducing interoffice switch between intra-pool MSCs. However, the MSC-Pool technique virtually enlarges the scope of interoffice switch between intra-pool MSCs and extra-pool MSCs.

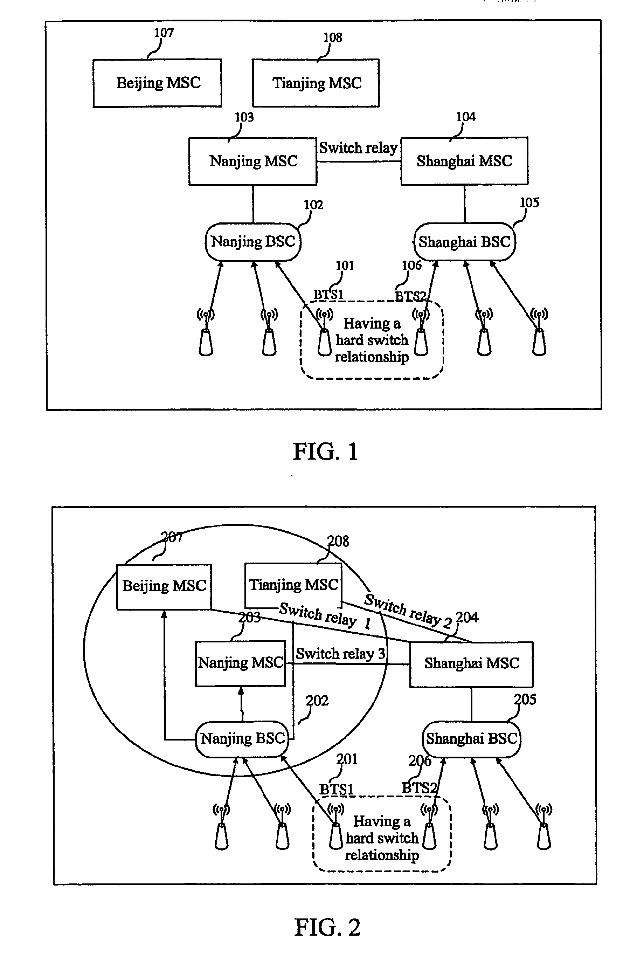

The current interoffice hard switch relationship is as shown in FIG. 1, wherein the base transceiver station BTS1-101 under Nanjing MSC-103 and the base transceiver station BTS2-106 under Shanghai MSC-104 have an interoffice hard switch relationship between each other. If Nanjing MSC-103, Beijing MSC-107 and Tianjing MSC-108 constitutes MSC-Pool, then it is required that the Beijing MSC-107 and Tianjing MSC-108 have a switch relay relationship with the Shanghai MSC-104, as shown in FIG. 2.

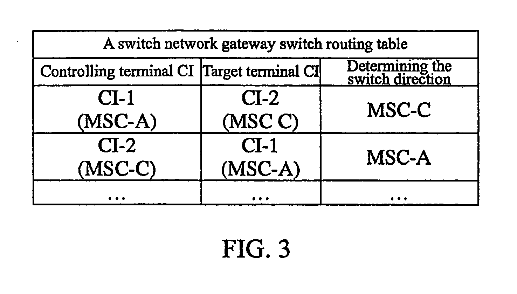

FIG. 3 shows a binary switch network gateway routing table. As shown in FIG. 3, the binary switch network gateway routing table includes a controlling terminal MSC-A, a controlling terminal interoffice switch cell ID (CI), a target terminal MSC-C, a target terminal interoffice switch cell ID (CI), wherein, the target terminal MSC-C and the target terminal interoffice switch CI identifies and determines the direction of switch path as an index.

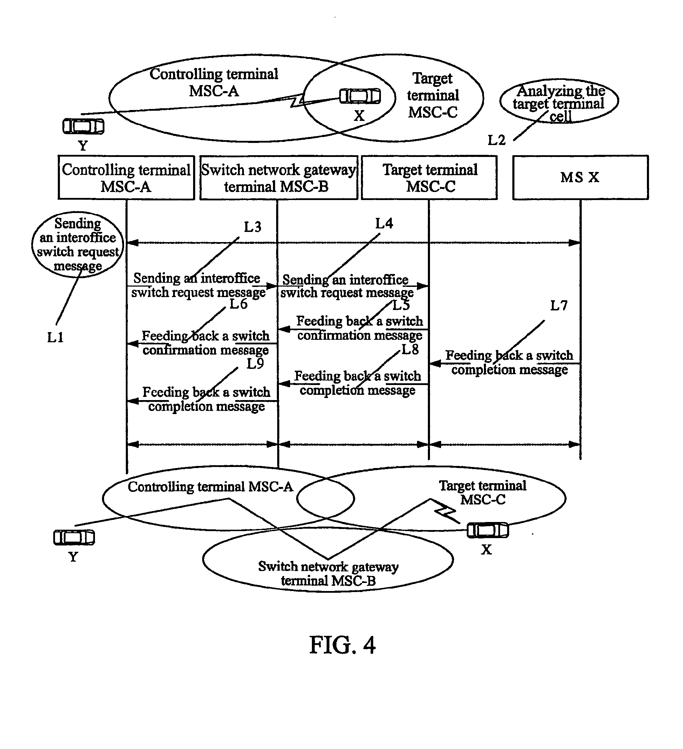

In the prior art, each pool can be designed to have a default MSC for assisting trans-pool switch to a certain extra-pool MSC, i.e., achieving the function of a switch gateway, in order to avoid the situation that each MSC in the pool is connected with the target terminal MSC and configured in data. In principle, the number of MSCs on the path of a trans-pool interoffice switch across the pool should be less than or equal to 3, i.e., a controlling terminal MSC, a switch network gateway terminal MSC and a target terminal MSC. As show in FIG. 4, MSC-B can serve as a switch network gateway for a hard switch between MSC-A and MSC-C, and the steps for implementing interoffice switch are as follows in detail:
L1, a base transceiver station sending an interoffice switch request message to the controlling terminal MSC-A;
L2, after receiving the interoffice switch request message, the above MSC-A analyzing a first target terminal cell;
L3, when the switch target terminal MSC-C is an extra-pool MSC, distributing an interoffice relay circuit and sending the interoffice switch request message to a switch network gateway terminal MSC-B;
L4, after receiving the interoffice switch request message, the switch network gateway terminal MSC-B analyzing the target terminal cell, and sending the switch request message to the target terminal MSC-C according to an switch path message of a switch routing table;
L5, after receiving the switch request message, the target terminal MSC-C feeding back a switch confirmation message to the switch network gateway terminal MSC-B;
L6, after receiving the switch confirmation message, the switch network gateway terminal MSC-B forwarding it to the controlling terminal MSC-A;
L7, after the controlling terminal MSC-A receives the switch confirmation message, the base transceiver station sending a switch completion message to the target terminal MSC-C;
L8, after receiving the switch completion message, the target terminal MSC-C forwarding it to the switch network gateway terminal MSC-B;
L9, after receiving the switch completion message, the switch network gateway terminal MSC-B forwarding it to the controlling terminal MSC-A.

In the current Code Division Multiple Access (CDMA) system, each interoffice switch CI is unique, and an interoffice associate context switch message does not carry controlling terminal MSC-ID or target terminal MSC-ID, or other related identifiers to assist differentiating the MSC where the interoffice switch CI is located.

At present, the switch routing table on the switch network gateway includes a controlling terminal MSC, a controlling terminal CI, a target terminal MSC, and a target terminal CI, wherein the target terminal MSC and the target terminal CI constitute a binary switch routing table which serves as an index for identifying and determining the trend of the switch path, as show in FIG. 3. In networking, it can only be ensured that the intra-pool CIs are uniformly distributed while the extra-pool CIs may be overlapped by the intra-pool CIs, thus causing failure of interoffice switch of MSC-Pool. As shown in FIG. 4, if the CI of the controlling terminal MSC-A and the CI of the target terminal MSC-C are the same, then the switch network gateway MSC-B will be unable to identify the correct switch path and hence causes switch failure.

Document WO 2004/047467 A1 discloses a method for identifying and selecting network nodes in a telecommunication system comprising a core network comprising a plurality of core network nodes, a plurality of radio network access servers belonging to one or more pool-areas and one or more IP base stations each of which being connected to one or more radio network access servers and a plurality of mobile terminals connected to one or more IP base stations. In this method, a core network node and a radio network access server in the pool-area is selected in connection with the core network node at the time of setting up a signaling connection to the core network and address information of the selected core network node to be used in the signaling connection set-up is sent to the selected radio network access server.

### Summary of the Invention

Aiming at the problem of switch failure existing in the prior art due to the reason that the switch network gateway terminal MSC cannot identify the correct switch path since the interoffice switch CI of the controlling terminal MSC is the same with the interoffice switch CI of the target terminal MSC, the present invention provides a method for Mobile Switch Controller Pool (MSC-Pool) interoffice switch to solve the above problem.

The technical solution of the present invention is as follows :
a method for Mobile Switch Controller Pool (MSC-Pool) interoffice switch in a Code Division Multiple Access (CDMA) mobile communication system, comprising the following steps of:
A, initiating interoffice switch function, and performing preceding processing for interoffice switch;
B, filling a target Signaling Connection Control Protocol (SCCP) layer address of an interoffice switch request message with a SCCP layer address of a switch gateway terminal Mobile Switch Controller (MSC);
C, after receiving the interoffice switch request message, the switch gateway terminal MSC performing interoffice switch according to a switch path message in a ternary switch routing table.

Wherein, the ternary switch routing table consists of: a switch network gateway terminal SCCP layer address, a controlling terminal interoffice switch cell ID, and a target terminal interoffice switch cell ID.

Wherein, the SCCP layer address includes a first SCCP layer address, a second SCCP layer address, a third SCCP layer address and a fourth SCCP layer address.

Wherein, the SCCP layer address is the fourth SCCP layer address.

Wherein, the step A further comprises the following steps of:
A1, a base transceiver station sending an interoffice switch request message to a controlling terminal MSC;
A2, after receiving the interoffice switch request message, the controlling MSC analyzing a first target terminal cell;
A3, if it is acquired through analysis that a target terminal MSC is another extra-pool MSC, distributing an interoffice relay circuit and sending the interoffice switch request message to the switch network gateway terminal MSC;

Wherein, the step C further comprises the following step of:
C1, the switch network gateway terminal MSC sending the interoffice switch request message to the target terminal MSC according to the switch path message.

Wherein, the method further comprises the following steps after step C1:
C2, the target terminal MSC feeding back a switch confirmation message to the switch network gateway terminal MSC;
C3, the switch network gateway terminal MSC forwarding the switch confirmation message to the controlling terminal MSC after receiving the switch confirmation message.

Wherein, the method further comprises the following steps after step C3:
C4, the base transceiver station sending a switch completion message to the target terminal MSC;
C5, the target terminal MSC forwarding the switch completion message to the switch network gateway terminal MSC after receiving the switch completion message;
C6, the switch network gateway terminal MSC forwarding the received switch completion message to the controlling terminal MSC.

By implementing interoffice switch using a switch path message in a ternary switch routing table consisting of a switch network gateway terminal SCCP layer address, a controlling terminal interoffice switch cell ID, and a target terminal interoffice switch cell ID, the method for Mobile Switch Controller Pool (MSC-Pool) interoffice switch provided by the present invention efficiently solves the technical problem in the prior art that the switch gateway terminal MSC cannot identify the correct switch path because the interoffice switch cell ID of the controlling terminal MSC is the same with the interoffice switch cell ID of the target terminal MSC, thereby improving the security of the switch gateway and increasing work efficiency.

### Brief Description of Drawings

FIG. 1 illustrates the interoffice switch architecture in the prior art;
FIG. 2 illustrates the architecture of a MSC-Pool enlarging the scope of interoffice switch in the prior art;
FIG. 3 is a binary switch routing table in the prior art;
FIG. 4 is a flow chart of switch network gateway interoffice switch in the prior art;
FIG. 5 is a ternary switch routing table according to the present invention;
FIG. 6 is a flow chart of interoffice switch based on a ternary switch network gateway routing table according to the present invention.

### Preferred Embodiments of the Present Invention

### Function overview

The core inventive concept of the present invention is that interoffice switch is performed according to a switch path message in a ternary switch routing table consisting of a SCCP layer address GT of a switch network gateway terminal MSC, a controlling terminal interoffice switch cell ID and a target terminal interoffice switch cell ID to be filled in a switch message, thus solving the technical problem in the prior art that the switch gateway terminal MSC cannot identify the correct switch path because the interoffice switch cell ID of the controlling terminal MSC is the same with the interoffice switch cell ID of the target terminal MSC, thereby improving the security of the switch gateway and increasing work efficiency.

The preferred embodiments of the present invention will be further described in detail with reference to the drawings.

In the examples of the present invention, the SCCP layer GT in the associate container MAP message is provided to differentiate different intra- and extra-pool MSCs with the same CI.

In the examples of the present invention, the SCCP layer address includes: GT1, GT2, GT3 and GT4, wherein GT is the most preferable embodiment among all the examples of the present invention because the message expressed thereby is the most complete and the effect achieved thereby is the best.

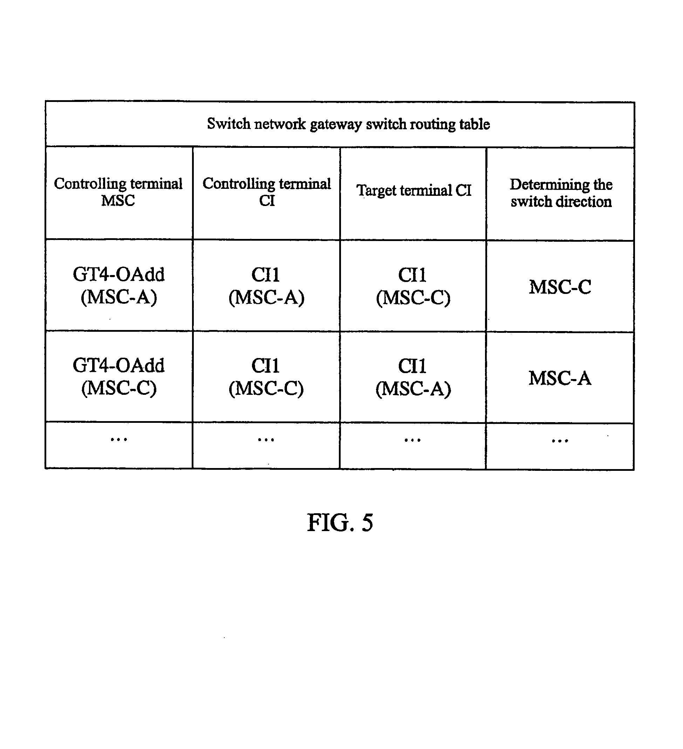

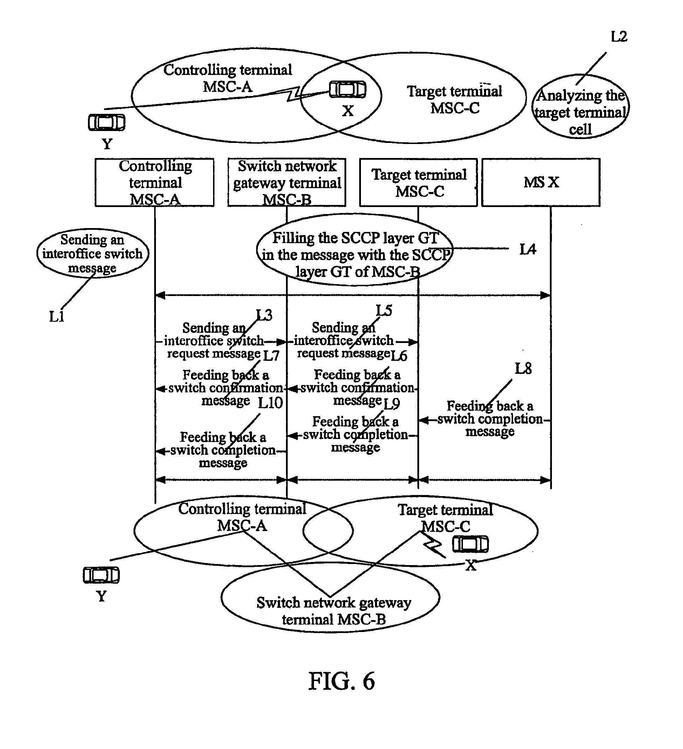

In the method for realizing MSC-Pool interoffice switch according to the present invention, a ternary switch routing table consisting of (switch network gateway terminal MSC-GT; a controlling terminal MSC, a controlling terminal CI; and a target terminal MSC, a target terminal CI) is used, as shown in FIG. 5, serving as an index for identifying and determining the direction of the switch path. When there are two MSCs with the same CI outside the pool and this CI is the same with the CI of the MSC inside the pool, different MSCs inside the pool can have a switch relationship with each MSC using different GTs. The advantage of doing so is that the MSC of the switch network gateway terminal can correctly identify various different interoffice switch paths. The specific steps for implementing the method are as shown in FIG. 6, comprising:
L1, a base transceiver station sending an interoffice switch request message to the controlling terminal MSC-A;
L2, after receiving the interoffice switch request message, the controlling terminal MSC-A analyzing a first target terminal cell;
L3, when the switch target terminal MSC-C is an extra-pool MSC, distributing an interoffice relay circuit and sending the interoffice switch request message to a switch network gateway terminal MSC-B;
L4, meanwhile, filling a target SCCP layer address GT in the switch message with a SCCP layer address GT of a switch gateway terminal MSC-B;
L5, after the switch network gateway terminal MSC-B receives the interoffice switch request message, making analysis according to the switch network gateway terminal SCCP layer address GT, the controlling terminal interoffice switch CI and the target terminal interoffice switch CI, and sending the switch request message to the target terminal MSC-C according to a switch path message of a switch routing table;
L6, the target terminal MSC-C feeding back a switch confirmation message to the switch network gateway terminal MSC-B;
L7, after receiving the switch confirmation message, the switch network gateway terminal MSC-B forwarding it to the controlling terminal MSC-A;
L8, the base transceiver station sending a switch completion message to the target terminal MSC-C;
L9, after receiving the switch completion message, the target terminal MSC-C forwarding it to the switch network gateway terminal MSC-B;
L10, the switch network gateway terminal MSC-B forwarding the switch completion message to the controlling terminal MSC-A.

By implementing interoffice switch using a switch path message in a ternary switch routing table consisting of a switch network gateway terminal SCCP layer address GT, a controlling terminal interoffice switch cell ID, and a target terminal interoffice switch cell ID, the method for Mobile Switch Controller Pool (MSC-Pool) interoffice switch provided by the present invention efficiently solves the technical problem in the prior art that the switch gateway terminal MSC cannot identify the correct switch path because the interoffice switch cell ID of the controlling terminal MSC is the same with the interoffice switch cell ID of the target terminal MSC, thereby improving the security of the switch gateway and increasing work efficiency, and providing convenience for the users.

It should be appreciated that although the above specific examples are described in detail, they are not intended to limit the protection scope of the present invention, which, instead, should be defined by attached claims.

## Claims

1. A method for Mobile Switch Controller Pool MSC-Pool interoffice switch in a Code Division Multiple Access CDMA mobile communication system, comprising the following steps of
A, initiating interoffice switch function, and performing preceding processing for interoffice switch (L1-L3) ;
B, filling a target Signaling Connection Control Protocol SCCP layer address of an interoffice switch request message with a SCCP layer address of a switch gateway terminal Mobile Switch Controller MSC (L4) ;
C, after receiving the interoffice switch request message, the switch gateway terminal MSC performing interoffice switch according to a switch path message in a ternary switch routing table (L5-L10).

2. The method according to claim 1, wherein, the ternary switch routing table includes: a switch network gateway terminal SCCP layer address, a controlling terminal interoffice switch cell ID, and a target terminal interoffice switch cell ID.

3. The method according to claim 1, wherein, the SCCP layer address includes a first SCCP layer address, a second SCCP layer address, a third SCCP layer address and a fourth SCCP layer address.

4. The method according to claim 1, wherein, the SCCP layer address is a fourth SCCP layer address.

5. The method according to claim 1, wherein, said step A further comprises the following steps of:
A1, a base transceiver station sending an interoffice switch request message to a controlling terminal MSC (L1) ;
A2, after receiving the interoffice switch request message, the controlling MSC analyzing a first target terminal cell (L2) ;
A3, if it is acquired through analysis that a target terminal MSC is another extra-pool MSC, distributing an interoffice relay circuit and sending the interoffice switch request message to the switch network gateway terminal MSC (**L3**).

6. The method according to claim 1, wherein, said step C further comprises the following step of:
C1, the switch network gateway terminal MSC sending the interoffice switch request message to a target terminal MSC according to the switch path message (**L5**).

7. The method according to claim 6, the method further comprising the following steps after step C1:
C2, the target terminal MSC feeding back a switch confirmation message to the switch network gateway terminal MSC (**L6**) ;
C3, the switch network gateway terminal MSC forwarding the switch confirmation message to the controlling terminal MSC after receiving the switch confirmation message (**L7**).

8. The method according to claim 7, the method further comprising the following steps after step C3:
C4, the base transceiver station sending a switch completion message to the target terminal MSC (**L8**) ;
C5, the target terminal MSC forwarding the switch completion message to the switch network gateway terminal MSC after receiving the switch completion message (**L9**) ;
C6, the switch network gateway terminal MSC forwarding the received switch completion message to the controlling terminal MSC (**L10**).

## Patentansprüche

1. Verfahren für eine betriebsinterne Leitungsvermittlung eines mobilen Leitungsvermittlungscontroller-Pools (MSC-Pools) in einem mobilen Codemultiplex-Kommunikationssystem (CDMA-Kommunikationssystem), das die folgenden Schritte umfasst:
A, Einleiten einer Funktion zur betriebsinternen Leitungsvermittlung und Ausführen einer vorausgehenden Verarbeitung für die betriebsinterne Leitungsvermittlung (L1 - L3);
B, Ausfüllen der Schichtadresse eines Ziels eines Signalverbindungssteuerungsprotokolls (SCCP) einer Meldung zur Anforderung einer betriebsinternen Leitungsvermittlung mit einer SCCP-Schichtadresse eines Leitungsvermittlungs-Gatewayanschlusses eines mobilen Leitungsvermittlungscontrollers (MSC) (L4);
C, Ausführen der betriebsinternen Leitungsvermittlung gemäß einer Leitungsvermittlungsstreckenmeldung in einer ternären Leitungsvermittlungsroutingtabelle (L5 - L10) durch den Leitungsvermittlungs-Gatewayanschluss des MSC nach Empfangen der Meldung zur Anforderung einer betriebsinternen Leitungsvermittlung.

2. Verfahren nach Anspruch 1,
wobei die ternäre Leitungsvermittlungsroutingtabelle enthält: eine SCCP-Schichtadresse des Leitungsvermittlungsnetzwerk-Gatewayanschlusses, die Zellen-ID eines Anschlusses der steuernden betriebsinternen Leitungsvermittlung und die Zellen-ID eines Zielanschlusses der betriebsinternen Leitungsvermittlung.

3. Verfahren nach Anspruch 1,
wobei die SCCP-Schichtadresse eine erste SCCP-Schichtadresse, eine zweite SCCP-Schichtadresse, eine dritte SCCP-Schichtadresse und eine vierte SCCP-Schichtadresse enthält.

4. Verfahren nach Anspruch 1,
wobei die SCCP-Schichtadresse eine vierte SCCP-Schichtadresse ist.

5. Verfahren nach Anspruch 1,
wobei der Schritt A ferner die folgenden Schritte umfasst:
A1, eine Basis-Sende/Empfangsstation sendet eine Meldung zur Anforderung einer betriebsinternen Leitungsvermittlung an den Anschluss eines steuernden MSC (L1);
A2, nach dem Empfang der Meldung zur Anforderung einer betriebsinternen Leitungsvermittlung analysiert der steuernde MSC eine erste Zelle des Zielanschlusses (L2);
A3, wenn durch die Analyse festgestellt wird, dass der Anschluss eines Ziel-MSC ein anderer MSC außerhalb des Pools ist, eine betriebsinterne Relaisschaltung eingeteilt wird und die Meldung zur Anforderung einer betriebsinternen Leitungsvermittlung an den Leitungsvermittlungsnetzwerk-Gatewayanschluss des MSC gesendet wird (L3).

6. Verfahren nach Anspruch 1,
wobei der Schritt C ferner den folgenden Schritt umfasst:
C1, der Leitungsvermittlungsnetzwerk-Gatewayanschluss des MSC sendet die Meldung zur Anforderung einer betriebsinternen Leitungsvermittlung an den Anschluss eines Ziel-MSC gemäß der Leitungsvermittlungsstreckenmeldung (L5).

7. Verfahren nach Anspruch 6,
wobei das Verfahren ferner die folgenden Schritte nach Schritt C1 umfasst:
C2, der Anschluss des Ziel-MSC sendet eine Leitungsvermittlungsbestätigungsmeldung zurück an den Leitungsvermittlungsnetzwerk-Gatewayanschluss des MSC (L6);
C3, der Leitungsvermittlungsnetzwerk-Gatewayanschluss des MSC leitet die Leitungsvermittlungsbestätigungsmeldung nach Empfang der Leitungsvermittlungsbestätigungsmeldung an den Anschluss des steuernden MSC weiter (L7).

8. Verfahren nach Anspruch 7,
wobei das Verfahren ferner die folgenden Schritte nach dem Schritt C3 umfasst:
C4, die Basis-Sende/Empfangsstation sendet eine Leitungsvermittlung-Abgeschlossen-Meldung an den Anschluss des Ziel-MSC (L8);
C5, der Anschluss des Ziel-MSC leitet die Leitungsvermittlung-Abgeschlossen-Meldung an den Leitungsvermittlungsnetzwerk-Gatewayanschluss des MSC weiter, nachdem er die Leitungsvermittlung-Abgeschlossen-Meldung empfangen hat (L9);
C6, der Leitungsvermittlungsnetzwerk-Gatewayanschluss des MSC leitet die empfangene Leitungsvermittlung-Abgeschlossen-Meldung an den Anschluss des steuernden MSC weiter (L10).

## Revendications

1. Procédé pour une commutation intercentraux de pool de contrôleurs de commutation mobile, MSC-Pool, dans un système de communication mobile à accès multiple par répartition en code, CDMA, comprenant les étapes suivantes consistant à :
A, initier une fonction de commutation intercentraux, et effectuer le traitement précédent pour la commutation intercentraux (L1-L3) ;
B, remplir une adresse de couche de protocole de contrôle de connexion de signalisation, SCCP, cible d'un message de demande de commutation intercentraux avec une adresse de couche SCCP d'un contrôleur de commutation mobile, MSC, d'un terminal passerelle de commutation (L4) ;
C, après la réception du message de demande de commutation intercentraux, le MSC du terminal passerelle de commutation effectuant la commutation intercentraux selon un message de trajet de commutation dans une table de routage de commutation ternaire (L5-L10).

2. Procédé selon la revendication 1, dans lequel, la table de routage de commutation ternaire inclut : une adresse de couche SCCP de terminal passerelle de réseau de commutation, un ID de cellule de commutation intercentraux de terminal de commande, et un ID de cellule de commutation intercentraux de terminal cible.

3. Procédé selon la revendication 1, dans lequel, l'adresse de couche SCCP inclut une première adresse de couche SCCP, une deuxième adresse de couche SCCP, une troisième adresse de couche SCCP et une quatrième adresse de couche SCCP.

4. Procédé selon la revendication 1, dans lequel, l'adresse de couche SCCP est une quatrième adresse de couche SCCP.

5. Procédé selon la revendication 1, dans lequel, ladite étape A comprend en outre les étapes suivantes de :
A1, une station d'émission-réception de base envoyant un message de demande de commutation intercentraux à un MSC de terminal de commande (L1) ;
A2, après la réception du message de demande de commutation intercentraux, le MSC de commande analysant une première cellule de terminal cible (L2) ;
A3, s'il est acquis par le biais de l'analyse qu'un MSC de terminal cible est un autre MSC de pool supplémentaire, distribuer un circuit de relais intercentraux et envoyer le message de demande de commutation intercentraux au MSC du terminal passerelle de réseau de commutation (L3).

6. Procédé selon la revendication 1, dans lequel, ladite étape C comprend en outre les étapes suivantes de :
C1, le MSC du terminal passerelle de réseau de commutation envoyant le message de demande de commutation intercentraux à un MSC de terminal cible selon le message de trajet de commutation (L5).

7. Procédé selon la revendication 6, le procédé comprenant en outre les étapes suivantes après l'étape C1 :
C2, le MSC du terminal cible donnant en retour un message de confirmation de commutation au MSC du terminal passerelle de réseau de commutation (L6) ;
C3, le MSC du terminal passerelle de réseau de commutation transférant le message de confirmation de commutation au MSC du terminal de commande après la réception du message de confirmation de commutation (L7).

8. Procédé selon la revendication 7, le procédé comprenant en outre les étapes suivantes après l'étape C3 :
C4, la station d'émission-réception de base envoyant un message d'achèvement de commutation au MSC du terminal cible (L8) ;
C5, le MSC du terminal cible transférant le message d'achèvement de commutation au MSC du terminal passerelle de réseau de commutation après la réception du message d'achèvement de commutation (L9) ;
C6, le MSC du terminal passerelle de réseau de commutation transférant le message d'achèvement de commutation reçu au MSC du terminal de commande (L10).
